(19) **Europäisches Patentamt / European Patent Office / Office européen des brevets**

(11) **EP 1 978 277 B1**

(12) **FASCICULE DE BREVET EUROPEEN**

(45) Date de publication et mention
de la délivrance du brevet:
**15.07.2009 Bulletin 2009/29**

(51) Int Cl.:
***F16F 9/504*** *(2006.01)*

(21) Numéro de dépôt: **08305086.4**

(22) Date de dépôt: **04.04.2008**

(54) **Module de compensation pour un amortisseur hydraulique de véhicule, et amortisseur equipé d'un tel module de compensation**

Ausgleichsmodul für einen Fahrzeughydraulikdämpfer und Dämpfer, der mit einem solchen Ausgleichsmodul ausgestattet ist

Compensation module for a hydraulic shock absorber of a vehicle and shock absorber equipped with such a compensation module

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.04.2007 FR 0754334**

(43) Date de publication de la demande:
**08.10.2008 Bulletin 2008/41**

(73) Titulaire: **PEUGEOT CITROËN AUTOMOBILES S.A.**
**78140 Vélizy Villacoublay (FR)**

(72) Inventeur: **Groult, Antonin**
**90000, BELFORT (FR)**

(56) Documents cités:
**EP-A- 1 754 909          EP-A1- 0 313 708**
**DE-A1- 19 912 212          US-A- 3 380 560**
**US-A- 4 492 290          US-B1- 6 334 516**

## Description

La présente invention concerne un module de compensation pour un amortisseur hydraulique à compensation adaptable pour véhicule, notamment pour véhicule automobile. Un tel module de compensation est connu du DE-A-199 12 212.

Elle concerne plus particulièrement un module de compensation comprenant au moins un diaphragme élastiquement déformable et dont la raideur est fonction de l'accélération du corps d'amortisseur.

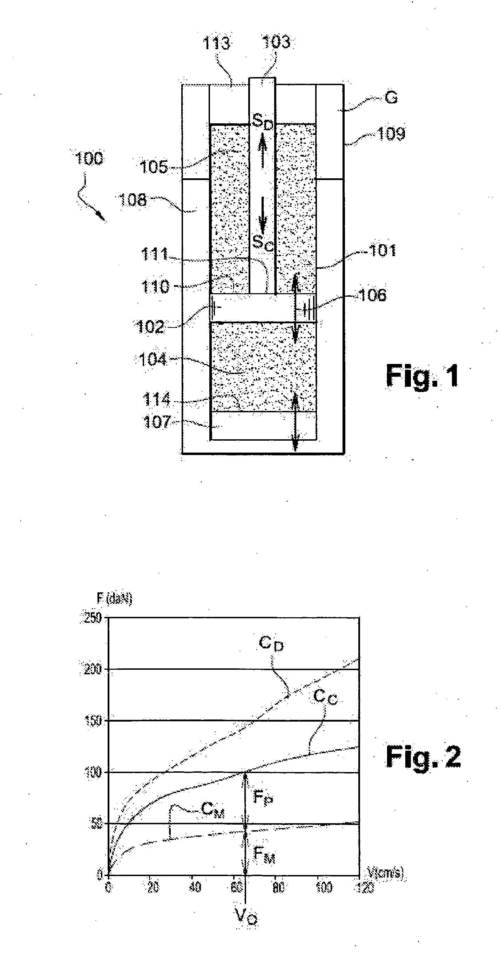

La description d'un amortisseur hydraulique à compensation adaptable pour véhicule, et notamment pour véhicule automobile, est faite en référence à la figure 1.

Un amortisseur 100 utilisé dans un véhicule automobile est constitué essentiellement d'un cylindre 101 dans lequel est monté mobile un piston 102 fixé au bout d'une tige 103 ; ladite tige coulissant dans un palier supérieur 113. Dans un certain nombre de réalisations, le cylindre 101 est fixé sur le châssis du véhicule et l'ensemble tige - piston est monté sur les éléments de suspension des roues du véhicule. Mais le plus souvent, c'est l'ensemble tige - piston qui est fixé sur le châssis du véhicule et le cylindre 101 est monté sur les éléments de suspension des roues du véhicule.

Par ailleurs, le piston 102 est disposé à l'intérieur du cylindre 101 de manière à diviser le cylindre 101 en deux chambres, respectivement de compression 104 et de détente 105, remplies d'un fluide hydraulique peu compressible, avantageusement de l'huile. De plus, le piston 102 est pourvu de moyens de mise en communication 106 entre les deux chambres 104, 105; lesdits moyens 106 étant destinés à générer une différence de pression entre les deux chambres 104, 105 en fonction des échanges (ou débits) de fluide entre les ces deux chambres 104, 105. Ces moyens 106 permettant le transfert de fluide entre ces deux chambres 104, 105 se présentent généralement sous la forme d'au moins un passage permettant de relier les deux chambres 104, 105 l'une à l'autre. Grâce à cette disposition, lorsque le piston 102 est déplacé à l'intérieur du cylindre 101 sous l'effet des efforts agissant sur la roue ou sur le châssis, ceci engendre un déplacement d'une partie de l'huile d'une chambre à l'autre à travers le passage 106. Le passage 106 étant calibré et/ou muni de clapets, une perte de charge est générée et crée un effort s'opposant au mouvement imposé par la roue et/ou le châssis.

L'huile étant faiblement compressible, le déplacement de l'ensemble tige - piston dans le cylindre 101 n'est possible que si le volume de tige déplacé est compensé. En général, cette compensation est réalisée par la mise en communication, à travers un module de compensation 107, de la chambre 104 non traversée par la tige 103, dite chambre de compression, avec un volume de gaz G compressible disposée au sein d'une chambre de compensation 108.

Pour cela, il est d'usage d'employer une des deux architectures suivantes :

- architecture monotube non représenté : le piston 102 est disposé au sein d'un cylindre 101 (autrement appelé corps d'amortisseur dans cette architecture) ne comprenant qu'une paroi, la chambre de compensation étant disposé également à l'intérieur dudit cylindre 101, dans la chambre de compression 104 avec qui elle est en communication ;

- architecture bi-tube représenté en figure 1 : l'ensemble cylindre 101 et tige - piston est disposé au sein d'un second cylindre 109 autrement appelé corps d'amortisseur. Ainsi la chambre de compensation 108 est formée de la chambre annulaire, située entre le cylindre 101 et le corps 109.

De manière générale, l'amortisseur 100 comprend un corps d'amortisseur 101, 109 dans lequel est ménagée une paroi 114 de séparation entre la chambre de compression 104 et la chambre de compensation 108 ; le module de compensation 107 est ainsi disposé au niveau de cette paroi 114.

En phase de compression, l'ensemble tige - piston rentre dans le cylindre 101, comme illustré par la flèche $S_C$, comprimant ainsi la chambre de compression 104, disposée entre le piston 102 et le module de compensation 107. De la sorte, le fluide hydraulique est forcé de circuler au travers du piston 102 et du module de compensation 107. Dans cette phase, il est généralement considéré que la section annulaire 110, entre la tige 103 et cylindre 101, pousse le fluide au travers du piston 102, et que la section circulaire 111 de la tige 103 pousse le fluide au travers du module de compensation 107. Le volume de gaz G ménagé dans la chambre de compensation 108 permet d'accueillir le volume de fluide lié au déplacement de la tige 103. La chambre de détente 105 se retrouve alors en dépression, et il convient de garantir que son niveau de pression ne chutera pas trop bas afin d'éviter un phénomène de cavitation à l'intérieur de ladite chambre de détente 105. Dans ce but, le module de compensation 107 impose une perte de charge suffisante au débit de tige pour garantir que la pression en chambre de détente 105 ne chutera pas au dessous de la pression moyenne en chambre de compensation 108.

En phase de détente, l'ensemble tige - piston sort du cylindre 101, comme illustré par la flèche $S_D$, comprimant ainsi la chambre de détente 105, disposée entre le piston 102 et le palier supérieur 113. De la sorte, la chambre de détente 105 est mise en pression et le fluide est forcé au travers du piston 102 vers la chambre de compression 104. Le volume de fluide aspiré par le déplacement de la tige 103 est prélevé dans la chambre de compensation 108, et alimente la chambre de compression 104 au travers du module de compensation 107. Ce module de compensation 107 doit alors imposer le moins de perte de charge possible au fluide, sous peine de mettre en dépression la chambre de compression 104.

La figure 2 est diagramme représentatif de la loi d'amortissement de l'amortisseur hydraulique 100 tel que décrit ci-dessus. Cette loi d'amortissement correspond à l'effort F mesuré sur la tige 103 en fonction de la vitesse V de déplacement de celle-ci par rapport au cylindre 101. Elle se représente sur un diagramme avec en abscisse la vitesse de tige V et en ordonnée l'effort tige F.

Deux courbes distinctes, respectivement $C_C$ et $C_D$, représentent respectivement :

- la phase de compression, la vitesse V correspondant à la vitesse de sortie de la tige 103 du cylindre 101 ; et
- la phase de détente, la vitesse V correspondant à la vitesse de rentrée de la tige 103 dans le cylindre 101.

Cette loi représente un objectif à atteindre en réglant les pertes de charge générées par les moyens de mise en communication 106 du piston 102 et par le module de compensation 107.

En phase de détente, le module de compensation 107 ne génère aucune perte de charge, et tout le réglage se fait par le réglage des moyens de mise en communication 106 du piston 102.

En phase de compression, par contre, l'effort F est généré par les moyens de mise en communication 106 du piston 102 et par le module de compensation 107. Afin de garantir un niveau de pression suffisant en chambre de détente 105 pendant la phase de compression, il faut que l'effort développé par le module de compensation 107 génère au moins l'effort total F multiplié par un facteur f, ledit facteur f s'exprimant selon la relation suivante :

$$f = \frac{\phi_T^2}{\phi_C^2}$$

où
$\Phi_T$ correspond au diamètre de la tige 103, et
$\Phi_C$ correspond au diamètre du cylindre 101.

Sur la figure 2, la courbe $C_M$ correspond à la contribution du module de compensation 107 à l'obtention de l'effort final F pendant la phase de compression. Ainsi, pour une vitesse $v_0$ donnée de déplacement de la tige 102, l'effort $F_M$ correspond à l'effort développé par le module de compensation 107 et l'effort restant $F_P$ correspond à l'effort développé par le piston 102 ; la somme de ces deux efforts $F_M$, $F_P$ valant l'effort total F à cette vitesse $v_0$ pendant la phase de compression.

De manière générale, le module de compensation 107 comporte des obstacles imposés à l'écoulement du fluide entre deux volumes. Ces obstacles peuvent se présenter sous la forme de :

- systèmes de dimension fixe, du type gicleur ; ou de
- systèmes déformables, formées d'éléments déformables comme des ressorts clapets ou des diaphragmes souples.

Le comportement hydraulique d'un module de compensation se caractérise généralement par une courbe dite de caractéristique hydraulique, représentant la perte de charge entre les deux volumes de fluide en fonction du débit d'écoulement du fluide.

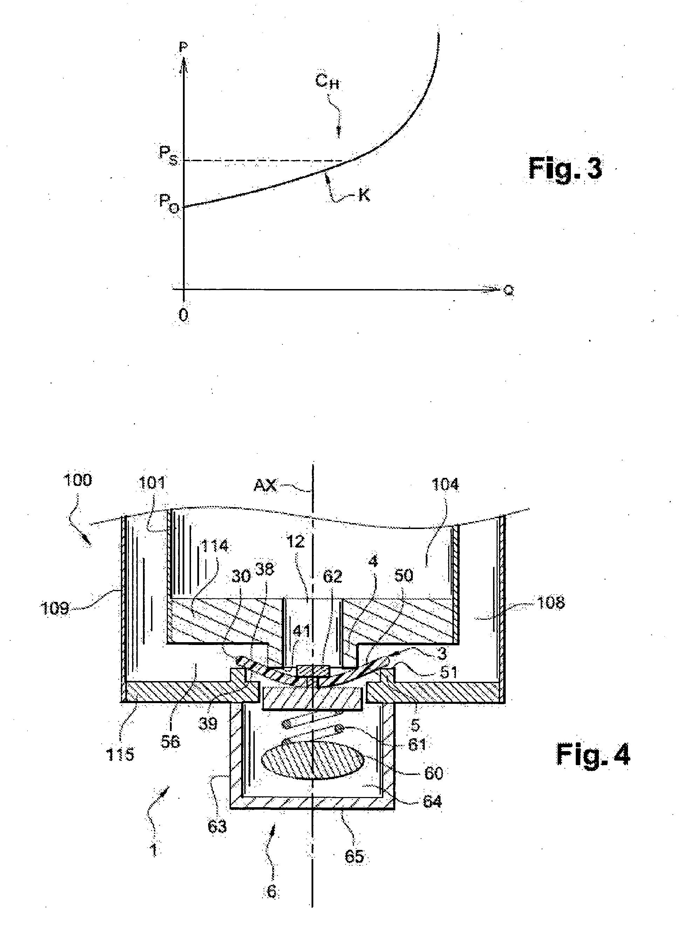

Dans le cas d'un module de compensation à système déformable et comme illustré en figure 3, la courbe de caractéristique hydraulique $C_H$ est plus ou moins linéaire, et peut être définie par les trois caractéristiques suivantes de la valve :

- son point d'ouverture $P_0$, qui dépend généralement de la précharge imposée aux éléments déformables, et qui correspond à la pression initiale nécessaire à l'ouverture du mécanisme, la courbe de caractéristique hydraulique $C_H$ variant linéairement à partir de ce point $P_0$ ;
- sa raideur K qui correspondant à la pente de la partie linéaire de la courbe $C_H$, et qui dépend notamment de la raideur des éléments déformable, et qui donne la relation entre accroissement de débit et accroissement de pression ; et
- son point de saturation $P_S$, déterminé généralement par la présence de butées des éléments déformables, et qui correspond à la pression au-delà de laquelle le système ne se déforme plus. La courbe $C_H$ prend alors une forme parabolique typique de la caractéristique hydraulique d'un système indéformable. Il est à noter que la saturation peut également être provoquée par la perte de charge générée par les éléments de structure qui supportent le système déformable, on parlera alors de perte de charge de structure ou de traînée.

Les éléments déformables couramment employés dans ces modules de compensations hydrauliques se présentent sous la forme d'au moins un diaphragme, dont la raideur est généralement fixée par leur géométrie initiale et le matériau employé.

L'invention propose d'asservir la raideur K du module de compensation à l'accélération du corps de l'amortisseur.

A cet effet, elle propose un module de compensation hydraulique pour un amortisseur de véhicule, notamment de véhicule automobile, ledit amortisseur comprenant un cylindre formant corps de l'amortisseur, dans lequel est monté mobile un piston fixé au bout d'une tige, ledit piston divisant ledit cylindre en deux chambres, respectivement de compression et de détente, et une chambre de compensation comprenant un volume de gaz compressible, ladite chambre de compensation étant séparée de la chambre de compression par une paroi. Selon l'invention, ce module comprend :

- un premier corps creux destiné à délimiter intérieurement une voie d'écoulement du fluide entre les chambres de compression et de compensation ;

- un deuxième corps creux destiné à être disposé au moins partiellement dans la chambre de compensation et fixe par rapport au premier corps creux, ledit deuxième corps creux présentant une percée en regard de la voie d'écoulement;

- un obturateur formé d'au moins un diaphragme élastiquement déformable placé sur la voie d'écoulement et sur la percée, contraint entre le premier corps et le deuxième corps ;

- des moyens de contrainte liés au diaphragme et destinés à exercer un effort sur ledit diaphragme sous l'effet d'une accélération du corps de l'amortisseur, de sorte que la raideur du module de compensation diminue sous l'effet d'une accélération du corps de l'amortisseur en phase de compression.

Conformément à d'autres caractéristiques avantageuses de l'invention :

- le diaphragme est en appui par sa face supérieure sur le premier corps creux de sorte à être placé sur la voie d'écoulement et est en appui par sa face inférieure sur le pourtour de la percée ;

- le premier corps est destiné à faire saillie de la paroi de l'amortisseur à l'intérieur de la chambre de compensation de l'amortisseur ;

- le deuxième corps est disposé en vis-à-vis de la paroi à une distance prédéterminée, et délimite partiellement une chambre entourant le premier corps creux, ladite chambre étant destiné à communiquer avec la chambre de compensation ;

- la voie d'écoulement débouche dans la chambre de compensation de l'amortisseur à une extrémité du corps creux, la face supérieure du diaphragme étant en appui, par sa partie centrale, sur ladite extrémité du premier corps.

Avantageusement, les moyens de contrainte comprennent un organe mobile, de masse prédéterminée, apte à se déplacer sous l'effet d'une accélération de l'ensemble tige-piston, ledit organe mobile étant lié au diaphragme pour pouvoir exercer un effort sur ce dernier.

Selon un mode de réalisation, l'organe mobile est une masselotte élastiquement relié au diaphragme. Ces moyens de contrainte peuvent comprendre un organe élastique solidaire à une extrémité de la masselotte et solidaire à l'extrémité opposée du diaphragme.

Les moyens de contrainte comprennent par exemple un manchon solidaire du deuxième corps, la percée du deuxième corps débouchant à l'intérieur dudit manchon et ledit manchon délimitant intérieurement une cellule à l'intérieur de laquelle sont disposés la masselotte et le ressort. Dans ce cas, la cellule est soit remplie de fluide hydraulique, ladite cellule étant mise en communication avec la chambre de compensation, soit remplie de gaz à une pression prédéterminée.

Selon un autre mode de réalisation, les moyens de contrainte comprennent un manchon solidaire du deuxième corps, la percée du deuxième corps débouchant à l'intérieur dudit manchon et ledit manchon délimitant intérieurement une cellule, ladite cellule étant également délimitée à une extrémité par l'organe mobile et à l'extrémité opposée par le diaphragme de sorte que le déplacement de l'organe mobile fait varier le volume de la cellule.

Dans cette réalisation particulière, le manchon est

- soit rigide et alors l'organe mobile est un piston monté coulissant à l'intérieur dudit manchon ;

- soit compressible et délimitant intérieurement une cellule remplie de fluide hydraulique entre l'organe mobile et le diaphragme.

L'invention se rapporte également à un amortisseur de véhicule, notamment de véhicule automobile, comprenant un module de compensation comme décrit ci avant.

D'autres caractéristiques et avantages de la présente invention apparaîtront à la lecture de la description détaillée ci-après, d'un exemple de mise en oeuvre non limitatif, faite en référence aux figures annexées dans lesquelles :

- la figure 1 est une vue schématique d'un amortisseur hydraulique d'architecture bi-tube ;

- la figure 2 est un diagramme représentatif de la loi d'amortissement de l'amortisseur hydraulique représenté en figure 1, avec des courbes représentatives de la détente, de la compression et de la contribution de la compensation dans un tel amortisseur ;

- la figure 3 est un diagramme représentant la pression en fonction du débit dans un module de compensation à système déformable ;

- les figures 4 et 5 représentent en coupe longitudinale partielle deux types d'amortisseurs hydrauliques d'architecture bi-tube équipés d'un module de compensation selon un premier mode de réalisation de l'invention ;

- la figure 6 représente en coupe longitudinale partielle un amortisseur hydraulique d'architecture mono-tube équipé d'un module de compensation selon le premier mode de réalisation de l'invention ;

- la figure 7 représente en coupe longitudinale partielle une variante de réalisation de l'amortisseur représenté en figure 6 ;

- la figure 8 représente en coupe longitudinale partielle un amortisseur hydraulique d'architecture bi-tube équipé d'un module de compensation selon un deuxième mode de réalisation de l'invention ;

- la figure 9 représente en coupe longitudinale partielle une variante de réalisation de l'amortisseur représenté en figure 8.

Les figures 1 à 3 ont été décrites ci-dessus. Les figures 4 à 9 illustrent des modes de réalisation préférés du module de compensation 1 selon l'invention, et de l'amortisseur hydraulique 100 équipé d'un tel module de compensation 1.

Le module de compensation 1 selon l'invention est destinée à amortir des oscillations de pression s'exerçant entre la chambre de compression 104 et la chambre de compensation 108 de l'amortisseur hydraulique 100, et de ce fait à contrôler le passage de fluide entre ces deux chambres 104, 108.

De manière générale, ce module de compensation 1 comprend :

- un premier corps creux 4 délimitant intérieurement une voie d'écoulement 12 du fluide entre les chambres de compression 104 et de compensation 108 ;
- un deuxième corps creux 5 disposé au moins partiellement dans la chambre de compensation 108 et fixe par rapport au premier corps creux 4, ledit deuxième corps creux 5 présentant une percée 50 en regard de la voie d'écoulement 12 ;
- un obturateur 3 formé d'au moins un diaphragme 30 élastiquement déformable placé sur la voie d'écoulement 12 et la percée 50, contraint entre le premier corps 4 et le deuxième corps 5 ;
- des moyens de contrainte 6 liés au diaphragme 30 et destinés à exercer un effort sur ledit diaphragme 30 sous l'effet d'une accélération du corps d'amortisseur 101, de sorte que la raideur K et le point d'ouverture $P_0$ du module de compensation 1 diminue sous l'effet d'une accélération de l'ensemble tige-piston en phase de compression.

Les moyens de contrainte 6 comprennent un organe mobile 60, de masse prédéterminée, apte à se déplacer sous l'effet d'une accélération du corps d'amortisseur 101 dans la direction longitudinale, notamment lorsque la roue du véhicule subit une forte accélération en compression lors d'un passage d'obstacle (tel qu'une bosse). Cet organe mobile 60 est lié au diaphragme 30 pour pouvoir exercer un effort sur ce dernier.

L'invention propose de faire varier la raideur K et le point d'ouverture $P_0$ du module 1 en fonction de l'accélération du corps d'amortisseur 101.

Dans une telle application aux amortisseurs hydrauliques, l'amortisseur 100 comprendra un canal de liaison (non représenté) entre la chambre de compensation 108 et la chambre de compression 104, avec un système anti retour permettant le passage libre de la chambre de compensation 108 vers la chambre de compression 104, et interdisant le passage dans le sens inverse de sorte à forcer le passage de fluide de la chambre de compression 104 vers la chambre de compensation 108 à travers le module de compensation 1. Le canal de liaison et le système anti-retour forme ainsi un clapet dit de réalimentation en détente.

Dans les différentes conceptions représentées aux figures 4 à 9, le premier corps 4 fait saillie de la paroi 114 à l'intérieur de la chambre de compensation 108. Préférentiellement, le premier corps creux 4 vient de matière avec ladite paroi 114. Le premier corps 41 présente ainsi une extrémité libre 41 disposée dans la chambre de compensation 108 et bordant la voie d'écoulement 12.

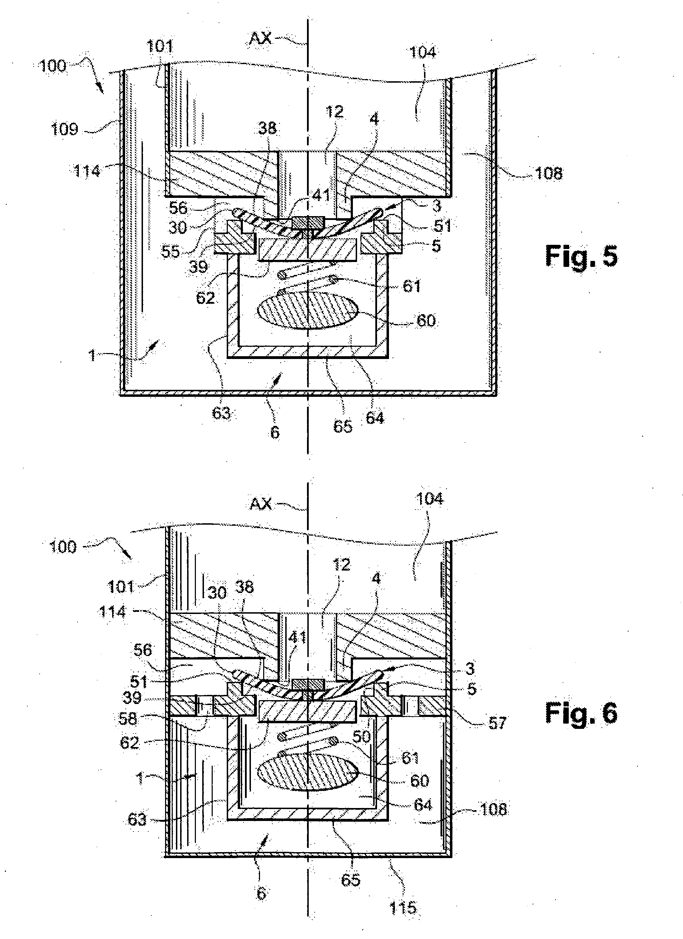

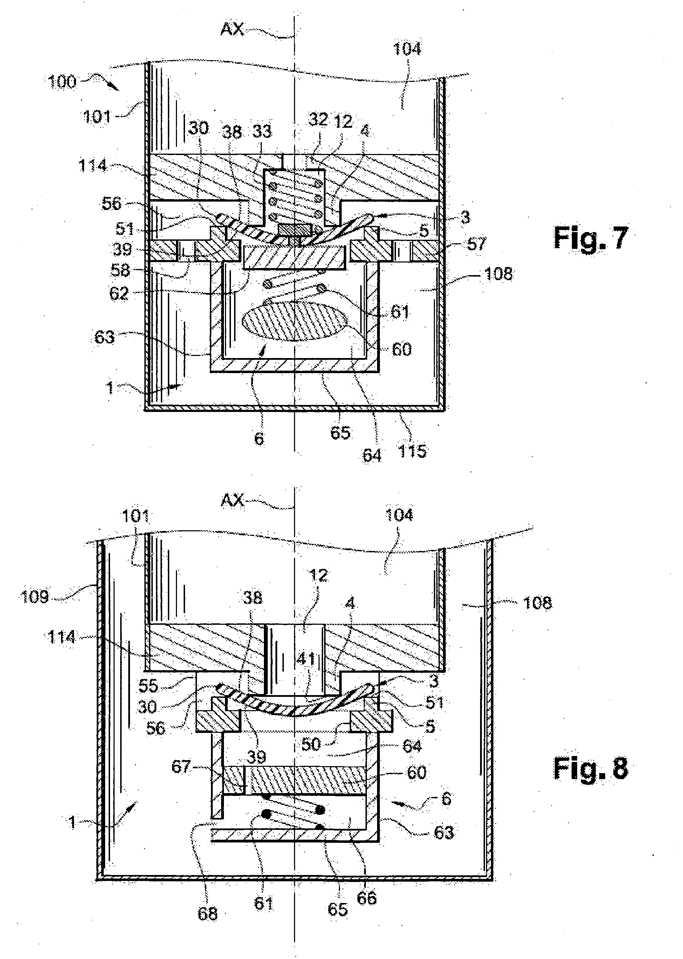

De manière générale et comme décrit ci-dessus, la paroi 114 forme une paroi de séparation entre la chambre de compression 104 et de la chambre de compensation 118. Cette paroi 114 présente une percée débouchant à l'intérieur du premier corps creux 4, de sorte que ladite paroi 114 délimite aussi intérieurement la voie d'écoulement 12. Dans une architecture d'amortisseur bi-tube représentée aux figures 4 et 5, cette paroi 114 forme le fond du cylindre 101. Dans une architecture d'amortisseur monotube représenté aux figures 6 et 7, cette paroi 114 forme une paroi transversale à l'intérieur du cylindre 101.

Le deuxième corps 5 est disposé en vis-à-vis de la paroi 114, à une distance prédéterminée, et délimite partiellement un espace annulaire 56 entourant le premier corps creux 4 ; ledit espace annulaire 56 communiquant avec la chambre de compensation 108. L'extrémité 51 du deuxième corps 5 en regard de la paroi 114 forme le pourtour de la percée 50.

Le diaphragme 30 présente deux faces opposées, respectivement supérieure 38 et inférieure 39. Selon l'invention, la face supérieure 38 du diaphragme 30 est en appui, par sa partie centrale, sur l'extrémité libre 41 du premier corps 4, ladite extrémité 41 formant ainsi une surface d'appui pour ledit diaphragme 30.

La face inférieure 39 du diaphragme 30 repose, par son bord périphérique, sur le deuxième corps 5 et plus particulièrement sur son extrémité 51 bordant la percée 50. Dans ce cas, le diaphragme 30 repose, par son bord périphérique, sur cette extrémité 51.

Ainsi, le diaphragme 30 forme un couvercle posé sur l'extrémité libre 41 du premier corps creux 4 et dont une partie de la face supérieure 38 recouvre la voie d'écoulement 12, le bord périphérique dudit diaphragme 30 débordant de ladite extrémité 41 venant en appui, sur la face inférieure 39, sur l'extrémité 51 du deuxième corps 5 de sorte à recouvrir également la percée 50.

La disposition particulière des deux surfaces d'appui du diaphragme 30, en l'occurrence les extrémités 41 et 51, et l'épaisseur du diaphragme 30 sont choisis de sorte que le diaphragme 30 est mis en contrainte entre ces deux extrémités 41, 51 et est bombé en direction de la chambre de compensation 108. Le diaphragme 30 se trouve ainsi en porte-à-faux entre les deux extrémités 41, 51 formants surfaces d'appui.

Selon un mode préféré de réalisation, les différents éléments présentent une symétrie de révolution selon un axe longitudinal AX, en l'occurrence :

- le premier corps 4 est de préférence en forme générale de couronne circulaire centrée sur l'axe longitudinal AX, l'extrémité libre 41 étant ainsi de forme annulaire et la voie d'écoulement 12 étant de forme générale cylindrique centrée sur cet axe AX ; et

- le deuxième corps creux 5 est avantageusement en forme générale de couronne circulaire centrée sur l'axe longitudinal AX, l'extrémité 51 étant ainsi de forme annulaire et la percée 50 étant de forme générale cylindrique centrée sur cet axe AX

De la sorte, le diamètre extérieur du premier corps 4 est inférieur au diamètre intérieur du deuxième corps 5. Dans cette configuration préférentielle, le diaphragme 30 est avantageusement en forme de disque circulaire, centré sur l'axe AX. Ainsi, ce diaphragme 30 présente un diamètre supérieur au diamètre intérieur du deuxième corps 5.

Comme représenté en figure 4 dans une architecture d'amortisseur bi-tube, le deuxième corps 5 est solidaire du fond 115 du corps 109, et plus particulièrement fait saillie dudit fond 115 à l'intérieur de la chambre de compensation 108.

Selon une variante représenté en figure 5 pour une architecture d'amortisseur bi-tube, le deuxième corps 5 est solidaire du fond 114 du cylindre 101 au moyen de parois longitudinales 55 reliant ledit corps 5 et ledit fond 114, et dans lesquelles sont pratiquées des lumières afin que l'espace annulaire 56 soit en communication avec la chambre de compensation 108. Les parois longitudinales 55 de liaison forment avantageusement une enceinte de forme cylindrique, centrée sur l'axe longitudinale AX.

Comme représenté en figure 6 dans une architecture d'amortisseur monotube, le deuxième corps 5 peut être solidaire de la paroi cylindrique du cylindre 101 au moyen d'une paroi transversale 57, avantageusement parallèle au fond 114 du cylindre 101, s'étendant à l'intérieur dudit cylindre 101, et dans laquelle sont ménagées des lumières 58 afin que l'espace annulaire 56 soit en communication avec la chambre de compensation 108.

Comme représenté en figure 7, un moyen de contrainte 33, avantageusement un ressort, peut être appui entre le fond 114 du cylindre 101 et la face supérieure 38 du diaphragme 30 de sorte à exercer une pression sur ledit diaphragme 30 en direction de la chambre de compensation 108. Ce ressort 33 permet un réglage supplémentaire de la raideur du module de compensation.

Concernant le fonctionnement du module de compensation 1, ce module 1 régule la perte de charge générée dans un écoulement de la chambre de compression 104 vers la chambre de compensation 108 en fonction de l'effort appliqué par l'organe mobile 60 sur le diaphragme 30. En phase de compression, le fluide hydraulique circule de la chambre de compression 104 vers la chambre de compensation 108 à travers le module de compensation 1 quand le diaphragme 30 décolle de l'extrémité libre 41 formant surface d'appui, et laisse libre le passage de fluide de la chambre 104 vers la chambre 108 ; quand le fluide circule entre les deux chambres 104, 108, l'obturateur 3 est dit ouvert.

L'effort exercé par l'organe mobile 60 sur le diaphragme 30 contrôle ainsi le point d'ouverture et la raideur du module 1. Ainsi, lors d'une accélération du corps de l'amortisseur dans le sens de la compression, l'organe mobile 60 exerce un effort selon une direction longitudinale vers le bas sur les figures 4 à 8, c'est-à-dire en direction de la chambre de compensation 108, et il tend à faire décoller le diaphragme 30 de l'extrémité 41, et donc à faire diminuer la raideur et le point d'ouverture du module de compensation 1.

La suite de la description porte sur les moyens de contrainte 6.

Selon un premier mode de réalisation représenté aux figures 4 à 7, l'organe mobile 60 est une masselotte élastiquement relié au diaphragme 30. Ainsi, les moyens de contrainte 6 comprennent un organe élastique 61, par exemple un ressort hélicoïdal, solidaire à une extrémité de la masselotte 60 et solidaire à l'extrémité opposée du diaphragme 30, et plus particulièrement de la partie centrale dudit diaphragme 30.

Le ressort 61 peut être solidaire du diaphragme 30 par l'intermédiaire d'une pièce d'appui 62 solidairement fixée sur la partie centrale du diaphragme 30. Pour cela, la pièce d'appui 62 peut présenter une partie formant surface d'appui dudit ressort 61, une partie intermédiaire traversant le diaphragme 30 et une partie coopérant avec ladite partie intermédiaire pour assurer la fixation de la pièce d'appui 62 sur le diaphragme 30.

L'effort de compression exercé par les moyens de contrainte 6 sur le diaphragme 30 correspond ainsi à un effort mécanique exercé directement sur le diaphragme 30 dans ce mode de réalisation.

Les moyens de contrainte 6 peuvent comprendre un manchon 63 solidaire du deuxième corps 5, la percée 50 du deuxième corps 5 débouchant à l'intérieur dudit manchon 63. Ce manchon 63 délimite intérieurement une cellule 64 à l'intérieur de laquelle sont disposés la masselotte 60 et le ressort 61. Cette cellule 64 peut être remplie :

- soit de fluide hydraulique, ladite cellule 64 étant ainsi mise en communication avec la chambre de compensation 108 ;

- soit de gaz à une pression prédéterminée, par exemple à pression atmosphérique, de sorte que les efforts exercés par la masselotte 60 sur le diaphragme 30 ne soit pas perturbés par l'amortissement visqueux exercé par un fluide hydraulique sur ladite masselotte 60, l'étanchéité étant assurée entre le diaphragme 30 et le deuxième corps 5 et la cellule 64, et un fond 65 fermant le manchon 63 à son extrémité opposée au deuxième corps 5.

Dans ce mode de réalisation, le manchon 63 est rigide, avantageusement de forme cylindrique. Dans le mode de réalisation représenté en figure 4, le manchon 63 est disposé à l'extérieur du corps 109 de l'amortisseur 100, le fond 115 du corps 109 présentant une percée afin que la percée 50 débouche à l'intérieur dudit manchon 63. Dans les variantes de réalisation des figures 5 à 7, le manchon 63 est disposé à l'intérieur de la chambre de compensation 108, et donc du corps 109.

Sous l'effet d'une forte accélération de la roue en compression, c'est-à-dire d'une accélération du corps de l'amortisseur en direction du haut sur la figure 4, la masselotte 60 exerce un effort vers le bas proportionnel à cette accélération et à sa masse propre. Cet effort fait chuter la raideur du module de compensation 1

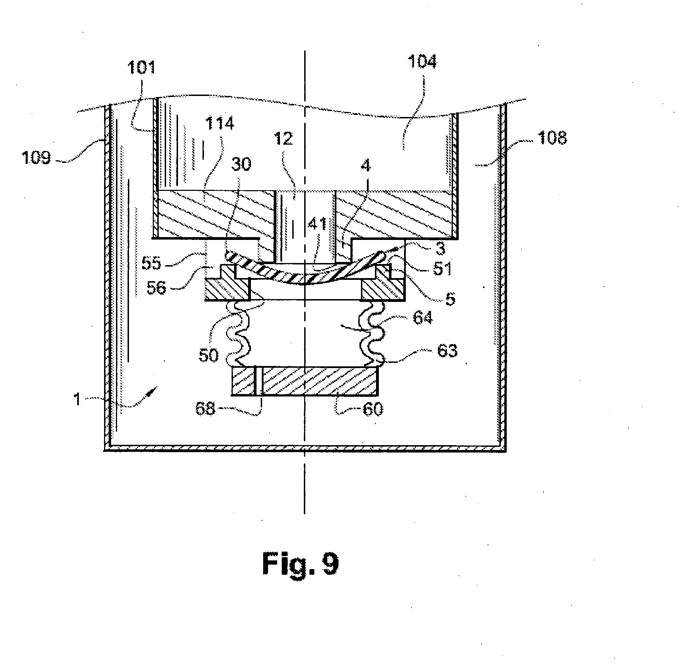

Selon un deuxième mode de réalisation représenté aux figures 8 et 9, les moyens de contrainte 6 comprennent un manchon 63 solidaire du deuxième corps 5, la percée 50 du deuxième corps 5 débouchant à l'intérieur dudit manchon 63, et l'organe mobile 60 est un piston, de masse prédéterminée.

Le manchon 63 délimite intérieurement une cellule 64, ladite cellule 64 étant également délimitée à une extrémité par le piston 60 et à l'extrémité opposée par le diaphragme 30. Le déplacement du piston 60 fait varier le volume de la cellule 64 de sorte que la pression à l'intérieur de ladite cellule 64 varie également.

Selon une réalisation illustrée en figure 8, le manchon 63 est rigide et le piston 60 est monté coulissant à l'intérieur dudit manchon 63, de manière à diviser le volume interne dudit manchon 63 en deux chambres, respectivement supérieure 64 et inférieure 66, remplies d'un fluide hydraulique. La chambre supérieure 64 forme ainsi la cellule telle que décrite ci-dessus. De plus, le piston 60 est pourvu de moyens de mise en communication 67 entre les deux chambres 64, 66 ; lesdits moyens 67 étant destinés à amortir des oscillations de pression s'exerçant entre ces deux chambres 64, 66. Ces moyens 67 permettant le transfert de fluide entre ces deux chambres 64, 66 se présentent généralement sous la forme d'au moins un passage, ou orifice de laminage, permettant de relier les deux chambres 64, 66 l'une à l'autre.

La pression de la chambre supérieure 64, ou cellule, s'oppose constamment à l'ouverture de l'obturateur 3 en plaquant le diaphragme 30 contre l'extrémité libre 41 du premier corps 4. Ainsi, plus cette pression est faible et moins le module de compensation 1 est raide.

Dans un module 1 selon l'invention, la perte de charge entre la chambre de compression 104 et la chambre de compensation 108 diminue lorsque la pression de la chambre supérieure 64 diminue, autrement dit la raideur K du module 1 diminue quand cette pression diminue.

En outre, le manchon 63 comporte un fond 65 fermant le manchon 63 à son extrémité opposée au deuxième corps 5. De plus, un organe élastique 61, par exemple un ressort hélicoïdal, est monté contraint dans la chambre inférieure 66 entre le piston 60 et le deuxième corps 5. Ce ressort 61 est ainsi monté entre la face du piston 60 opposée au diaphragme 30 et le fond 65 du manchon 63 délimitant la chambre inférieure 66. Un orifice 68 est avantageusement ménagé dans ledit fond 65 afin de mettre en communication la chambre inférieure 66 et la chambre de compensation 108.

Les mouvements du piston 60, identiques à ceux de la masselotte dans le premier mode de réalisation, font ainsi varier la pression dans la chambre supérieure 64 en fonction de la vitesse de déplacement dudit piston 60 et des moyens de mise en communication 67, comme par exemple la dimension de l'orifice de laminage.

Sous l'effet d'une forte accélération de la roue en compression, c'est-à-dire d'une accélération du corps de l'amortisseur en direction du haut sur la figure 8, le piston pesant 60 se déplace vers le bas conduisant à la diminution de la pression dans la chambre supérieure 64. Comme décrit ci-dessus, cette chute de pression fait diminuer la raideur du module de compensation 1.

Comme illustré en figure 9, en variante du deuxième mode de réalisation, le module 1 comprend un manchon compressible 63 monté étanche entre le piston 60 et le deuxième corps 5 ; la percée 50 du deuxième corps 5 débouchant à l'intérieur dudit manchon 63. On entend par manchon compressible 63 un organe creux compressible délimitant une cellule 64 remplie de fluide hydraulique entre le piston 60 et le diaphragme 30.

Un orifice de laminage 68 est ménagé dans le piston 60, assurant ainsi une mise en communication entre la chambre de compensation 108 et la cellule 64.

Le manchon compressible 63 représenté en figure 9 est formé d'une surface de révolution autour de l'axe longitudinal AX, de forme ondulée. Cette surface est par exemple en matière métallique. Bien entendu, tout autre type d'organe déformable creux 63 peut être envisagé, comme par exemple une vessie élastomère.

Comme décrit précédemment, un déplacement du piston 60 du fait d'une accélération de l'ensemble tige-piston, conduit à une variation du volume de la cellule 64 et donc à une variation de la pression dans ladite cellule 64 et donc à une variation de la raideur du module de compensation 1.

Bien entendu l'exemple de mise en oeuvre évoqué ci-dessus ne présente aucun caractère limitatif et d'autres détails et améliorations peuvent être apportés au module de compensation et à l'amortisseur selon l'invention, sans pour autant sortir du cadre de l'invention. Par exemple, l'obturateur peut être formé d'un empilement de diaphragmes 30, plein ou annulaire.

## Revendications

1. Module de compensation hydraulique (1) pour un amortisseur (100) de véhicule, notamment de véhicule automobile, ledit amortisseur (100) comprenant un cylindre (101) formant corps de l'amortisseur, dans lequel est monté mobile un piston (102) fixé au bout d'une tige (103), ledit piston (102) divisant ledit cylindre (101) en deux chambres, respectivement de compression (104) et de détente (105), et une chambre de compensation (108) comprenant un volume de gaz (G) compressible, ladite chambre de compensation (108) étant séparée de la chambre de compression (104) par une paroi (114), ledit module étant **caractérisé en ce qu'**il comprend :

    - un premier corps creux (4) destiné à délimiter intérieurement une voie d'écoulement (12) du fluide entre les chambres de compression (104) et de compensation (108) ;
    - un deuxième corps creux (5) destiné à être disposé au moins partiellement dans la chambre de compensation (108) et fixe par rapport au premier corps creux (4), ledit deuxième corps creux (5) présentant une percée (50) en regard de la voie d'écoulement (12) ;
    - un obturateur (3) formé d'au moins un diaphragme (30) élastiquement déformable placé sur la voie d'écoulement (12) et sur la percée (50), contraint entre le premier corps (4) et le deuxième corps (5) ;
    - des moyens de contrainte (6) liés au diaphragme (30) et destinés à exercer un effort sur ledit diaphragme (30) sous l'effet d'une accélération du corps de l'amortisseur, de sorte que la raideur du module de compensation (1) diminue sous l'effet d'une accélération du corps de l'amortisseur en phase de compression.

**2.** Module de compensation (1) selon la revendication 1, **caractérisé en ce que** le diaphragme (30) est en appui par sa face supérieure (38) sur le premier corps creux (4) de sorte à être placé sur la voie d'écoulement (12) et est en appui par sa face inférieure (39) sur le pourtour de la percée (50).

**3.** Module de compensation (1) selon la revendication 2, **caractérisé en ce que** le premier corps (4) est destiné à faire saillie de la paroi (114) de l'amortisseur (100) à l'intérieur de la chambre de compensation (108) de l'amortisseur (100).

**4.** Module de compensation (1) selon la revendication 3, **caractérisé en ce que** le deuxième corps (5) est destiné à être disposé en vis-à-vis de la paroi (114), à une distance prédéterminée, et délimite partiellement une chambre (56) entourant le premier corps creux (4), ladite chambre (56) étant destiné à communiquer avec la chambre de compensation (108).

**5.** Module de compensation (1) selon l'une quelconque des revendications 1 à 4, **caractérisé en ce que** les moyens de contrainte (6) comprennent un organe mobile (60), de masse prédéterminée, apte à se déplacer sous l'effet d'une accélération de l'ensemble tige-piston, ledit organe mobile (60) étant lié au diaphragme (30) pour pouvoir exercer un effort sur ce dernier.

**6.** Module de compensation (1) selon la revendication 5, **caractérisé en ce que** l'organe mobile (60) est une masselotte élastiquement relié au diaphragme (30).

**7.** Module de compensation (1) selon la revendication 6, **caractérisé en ce que** les moyens de contrainte (6) comprennent un organe élastique (61) solidaire à une extrémité de la masselotte (60) et solidaire à l'extrémité opposée du diaphragme (30).

**8.** Module de compensation (1) selon la revendication 7, **caractérisé en ce que** les moyens de contrainte (6) comprennent un manchon (63) solidaire du deuxième corps (5), la percée (50) du deuxième corps (5) débouchant à l'intérieur dudit manchon (63) et ledit manchon (63) délimitant intérieurement une cellule (64) à l'intérieur de laquelle sont disposés la masselotte (60) et le ressort (61).

**9.** Module de compensation (1) selon la revendication 8, **caractérisé en ce que** la cellule (64) est remplie de fluide hydraulique, ladite cellule (64) étant destiné à être mise en communication avec la chambre de compensation (108).

**10.** Module de compensation (1) selon la revendication 8, **caractérisé en ce que** la cellule (64) est remplie de gaz à une pression prédéterminée.

**11.** Module de compensation (1) selon la revendication 5, **caractérisé en ce que** les moyens de contrainte (6) comprennent un manchon (63) solidaire du deuxième corps (5), la percée (50) du deuxième corps (5) débouchant à l'intérieur dudit manchon (63) et ledit manchon (63) délimitant intérieurement une cellule (64), ladite cellule (64) étant également délimitée à une extrémité par l'organe mobile (60) et à l'extrémité opposée par le diaphragme (30) de sorte que le déplacement de l'organe mobile (60) fait varier le volume de la cellule (64).

**12.** Module de compensation (1) selon la revendication 11, **caractérisé en ce que** le manchon (63) est rigide et l'organe mobile (60) est un piston monté coulissant à l'intérieur dudit manchon (63).

**13.** Module de compensation (1) selon la revendication 11, **caractérisé en ce que** le manchon (63) est un manchon compressible délimitant intérieurement une cellule (64) remplie de fluide hydraulique entre l'organe mobile (60) et le diaphragme (30).

**14.** Module de compensation (1) selon l'une quelconque des revendications précédentes, **caractérisé en ce que** la voie d'écoulement (12) est destiné à déboucher dans la chambre de compensation (108) de l'amortisseur (100) à une extrémité (41) du corps creux (4), la face supérieure (38) du diaphragme (30) étant en appui, par sa partie centrale, sur ladite extrémité (41) du premier corps (4).

15. Module de compensation (1) selon la revendication 14, **caractérisé en ce que** la face supérieure (38) du diaphragme (30) repose, par son bord périphérique, sur le deuxième corps (5) et plus particulièrement sur le pourtour de la percée (50).

16. Amortisseur (100) de véhicule, notamment de véhicule automobile, comprenant un module de compensation (1) selon l'une quelconque des revendications précédentes.

**Claims**

1. Hydraulic compensation module (1) for a vehicle, particularly a motor vehicle, shock absorber (100), said shock absorber (100) comprising a cylinder (101) forming the body of the shock absorber, and in which there is mounted such that it can move a piston (102) that is fixed to the end of a rod (103), the said piston (102) dividing the said cylinder (101) into two chambers, respectively a compression chamber (104) and an expansion chamber (105), and a compensation chamber (108) comprising a volume of compressible gas (G), the said compensation chamber (108) being separated from the compression chamber (104) by a wall (114), the said module being **characterized in that** it comprises:

   - a first hollow body (4) intended internally to delimit a path (12) along which fluid can flow between the compression (104) and compensating (108) chambers;
   - a second hollow body (5) intended to be positioned at least partially in the compensation chamber (108) and fixed with respect to the first hollow body (4), the said second hollow body (5) having a drilling (50) facing the flow path (12);
   - an obturator (3) formed of at least one elastically deformable diaphragm (30) positioned on the flow path (12) and on the drilling (50), constrained between the first body (4) and the second body (5);
   - stressing means (6) associated with the diaphragm (30) and intended to apply a force to the said diaphragm (30) under the effect of an acceleration of the body of the shock absorber so that the stiffness of the compensation module (1) decreases under the effect of acceleration of the body of the shock absorber in the compression phase.

2. Compensation module (1) according to Claim 1, **characterized in that** the diaphragm (30) rests via its upper face (38) against the first hollow body (4) so that it lies in the flow path (12) and rests via its lower face (39) around the periphery of the drilling (50).

3. Compensation module (1) according to Claim 2, **characterized in that** the first body (4) is intended to project from the wall (114) of the shock absorber (100) into the compensation chamber (108) of the shock absorber (100).

4. Compensation module (1) according to Claim 3, **characterized in that** the second body (5) is intended to be positioned facing the wall (114) a predetermined distance away and partially delimits a chamber (56) surrounding the first hollow body (4), the said chamber (56) being intended to communicate with the compensation chamber (108).

5. Compensation module (1) according to any one of Claims 1 to 4, **characterized in that** the stressing means (6) comprise a mobile member (60) of predetermined mass able to move onto the effect of an acceleration of the rod-piston assembly, the said mobile member (60) being connected to the diaphragm (30) in order to be able to apply a force thereto.

6. Compensation module (1) according to Claim 5, **characterized in that** the mobile member (60) is a bob weight elastically connected to the diaphragm (30).

7. Compensation module (1) according to Claim 6, **characterized in that** the stressing means (6) comprise an elastic member (61) secured at one end to the bob weight (60) and secured at the opposite end to the diaphragm (30).

8. Compensation module (1) according to Claim 7, **characterized in that** the stressing means (6) comprise a sleeve (63) secured to the second body (5), the drilling (50) in the second body (5) opening into the said sleeve (63) and the said sleeve (63) internally delimiting a cell (64) in which the bob weight (60) and the spring (61) are located.

9. Compensation module (1) according to Claim 8, **characterized in that** the cell (64) is filled with hydraulic fluid, the said cell (64) being intended to replace in communication with the compensation chamber (108).

10. Compensation module (1) according to Claim 8, **characterized in that** the cell (64) is filled with gas at a predetermined pressure.

**11.** Compensation module (1) according to Claim 5, **characterized in that** the stressing means (6) comprise a sleeve (63) secured to the second body (5), the drilling (50) in the second body (5) opening into the said sleeve (63) and the said sleeve (63) internally delimiting a cell (64), the said cell (64) also being delimited at one end by the mobile member (60) and at the opposite end by the diaphragm (30) such that movement of the mobile member (60) causes the volume of the cell (64) to vary.

**12.** Compensation module (1) according to Claim 11, **characterized in that** the sleeve (63) is rigid and the mobile member (60) is a piston mounted such that it can slide inside the said sleeve (63).

**13.** Compensation module (1) according to Claim 11, **characterized in that** the sleeve (63) is a compressible sleeve internally delimiting a cell (64) filled with hydraulic fluid between the mobile member (60) and the diaphragm (30).

**14.** Compensation module (1) according to any one of the preceding claims, **characterized in that** the flow path (12) is intended to open into the compensation chamber (108) of the shock absorber (100) at one end (41) of the hollow body (4), the upper face (38) of the diaphragm (30) pressing, via its central part, on the said end (41) of the first body (4).

**15.** Compensation module (1) according to Claim 14, **characterized in that** the upper face (38) of the diaphragm (30) rests, via its peripheral edge, on the second body (5) and more specifically on the periphery of the drilling (50).

**16.** Vehicle, particularly motor vehicle, shock absorber (100) comprising a compensation module (1) according to any one of the preceding claims.

**Patentansprüche**

**1.** Hydraulisches Ausgleichsmodul (1) für einen Dämpfer (100) eines Fahrzeugs, insbesondere eines Kraftfahrzeugs, wobei der Dämpfer (100) einen Zylinder (101), der den Dämpferkörper bildet, indem ein am Ende einer Stange (103) befestigter Kolben (102) beweglich angebracht ist, wobei der Kolben (102) den Zylinder (101) in zwei Kammern, eine Druckkammer (104) und eine Entspannungskammer (105), unterteilt, und eine Ausgleichskammer (108), die durch eine Wand (114) von der Druckkammer (104) getrennt ist, aufweist, wobei das Modul **dadurch gekennzeichnet ist, dass** es Folgendes umfasst:

- einen ersten Hohlkörper (4), der innen einen Strömungsweg (12) des Fluids zwischen der Druckkammer (104) und der Ausgleichskammer (108) innen begrenzen soll;
- einen zweiten Hohlkörper (5), der zumindest teilweise in der Ausgleichskammer (108) angeordnet sein soll und bezüglich des ersten Hohlkörpers (4) festgelegt ist, wobei der zweite Hohlkörper (5) gegenüber dem Strömungsweg (12) eine Bohrung aufweist;
- ein Verschlussglied (3), das aus mindestens einer elastisch verformbaren Membran (30) gebildet ist, die auf dem Strömungsweg (12) und auf der Bohrung (50) platziert und zwischen dem ersten Körper (4) und dem zweiten Körper (5) eingezwängt ist;
- Belastungsmittel (6), die mit der Membran (30) verbunden und dazu bestimmt sind, unter der Wirkung einer Beschleunigung des Dämpferkörpers auf die Membran (30) eine Kraft auszuüben, so dass sich die Steifigkeit des Ausgleichsmoduls (1) unter der Wirkung einer Beschleunigung des Dämpferkörpers verringert.

**2.** Ausgleichsmodul (1) nach Anspruch 1, **dadurch gekennzeichnet, dass** die Membran (30) mit ihrer Oberseite (38) an dem ersten Hohlkörper (3) anliegt, so dass sie auf dem Strömungsweg (12) verschoben wird, und mit ihrer Unterseite (39) an dem Umfang der Bohrung (50) anliegt.

**3.** Ausgleichsmodul (1) nach Anspruch 2, **dadurch gekennzeichnet, dass** der erste Körper (4) von der Wand (114) des Dämpfers (100) im Inneren der Ausgleichskammer (108) des Dämpfers (100) vorstehen soll.

**4.** Ausgleichsmodul (1) nach Anspruch 3, **dadurch gekennzeichnet, dass** der zweite Körper (5) in einem vorbestimmten Abstand gegenüber der Wand (114) angeordnet sein soll und eine den ersten Hohlkörper (4) umgebende Kammer (56) teilweise begrenzt, wobei die Kammer (56) mit der Ausgleichskammer (108) in Verbindung stehen soll.

**5.** Ausgleichsmodul (1) nach einem der Ansprüche 1 bis 4, **dadurch gekennzeichnet, dass** die Belastungsmittel (6) ein bewegliches Glied (60) mit vorbestimmter Masse aufweisen, das sich unter der Wirkung einer Beschleunigung der Stangen-Kolben-Anordnung verschieben kann, wobei das bewegliche Glied (60) mit der Membran (30) verbunden ist, um auf diese eine Kraft ausüben zu können.

**6.** Ausgleichsmodul (1) nach Anspruch 5, **dadurch gekennzeichnet, dass** das bewegliche Glied (60) ein Fliehgewicht ist, das elastisch mit der Membran (30) verbunden ist.

7. Ausgleichsmodul (1) nach Anspruch 6, **dadurch gekennzeichnet, dass** die Belastungsmittel (6) ein elastisches Glied (61) umfassen, das mit einem Ende des Fliehgewichts (60) fest verbunden ist und am gegenüberliegenden Ende von der Membran (30) befestigt ist.

8. Ausgleichsmodul (1) nach Anspruch 7, **dadurch gekennzeichnet, dass** die Belastungsmittel (6) eine Buchse (63) umfassen, die mit dem zweiten Körper (5) fest verbunden ist, wobei die Bohrung (50) des zweiten Körpers (5) im Inneren der Buchse (63) mündet und die Buchse (63) innen eine Zelle 864) begrenzt, in der das Fliehgewicht (60) und die Feder (61) angeordnet sind.

9. Ausgleichsmodul (1) nach Anspruch 8, **dadurch gekennzeichnet, dass** die Zelle (64) mit Hydraulikfluid gefüllt ist, wobei die Zelle (64) mit der Ausgleichskammer (108) in Verbindung treten soll.

10. Ausgleichsmodul (1) nach Anspruch 8, **dadurch gekennzeichnet, dass** die Zelle 864) mit unter einem vorbestimmten Druck stehenden Gas gefüllt ist.

11. Ausgleichsmodul (1) nach Anspruch 5, **dadurch gekennzeichnet, dass** die Belastungsmittel (6) eine Buchse (63) umfassen, die mit dem zweiten Körper (5) fest verbunden ist, wobei die Bohrung (50) des zweiten Körpers (5) im Inneren der Buchse (63) mündet und die Buchse (63) innen eine Zelle (64) begrenzt, wobei die Zelle (64) des Weiteren an einem Ende durch ein bewegliches Glied (60) und an dem gegenüberliegenden Ende durch die Membran (30) begrenzt wird, so dass durch Verschiebung des beweglichen Glieds (60) das Volumen der Zelle (64) geändert wird

12. Ausgleichsmodul (1) nach Anspruch 11, **dadurch gekennzeichnet, dass** die Buchse (63) starr ist und das bewegliche Glied (60) ein Kolben ist, der verschiebbar im Inneren der Buchse (63) angebracht ist.

13. Ausgleichsmodul (1) nach Anspruch 11, **dadurch gekennzeichnet, dass** die Buchse (63) eine komprimierbare Buchse ist, die innen zwischen dem beweglichen Glied (60) und der Membran (30) eine mit Hydraulikfluid gefüllte Zelle (64) begrenzt.

14. Ausgleichsmodul (1) nach einem der vorhergehenden Ansprüche, **dadurch gekennzeichnet, dass** der Strömungsweg (12) in der Ausgleichskammer (108) des Dämpfers (100) an einem Ende (41) des Hohlkörpers (4) münden soll, wobei die Oberseite (38) der Membran (30) durch ihren mittleren Teil an dem Ende (41) des ersten Körpers (4) anliegt.

15. Ausgleichsmodul (1) nach Anspruch 14, **dadurch gekennzeichnet, dass** die Oberseite (38) der Membran (30) mit ihrem Umfangsrand auf dem zweiten Körper (5) und insbesondere auf dem Umfang der Bohrung (50) aufliegt.

16. Dämpfer (100) eines Fahrzeugs, insbesondere eines Kraftfahrzeugs, mit einem Ausgleichsmodul (1) nach einem der vorhergehenden Ansprüche.

**Fig. 1**

**Fig. 2**

Fig. 3

Fig. 4

Fig. 5

Fig. 6

Fig. 7

Fig. 8

**Fig. 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19912212 A